(19) Europäisches Patentamt
European Patent Office
Office européen des brevets

(11) **EP 2 297 211 B1**

(12) **EUROPÄISCHE PATENTSCHRIFT**

(45) Veröffentlichungstag und Bekanntmachung des Hinweises auf die Patenterteilung:
**26.12.2012 Patentblatt 2012/52**

(21) Anmeldenummer: **09780052.8**

(22) Anmeldetag: **01.07.2009**

(51) Int Cl.:
***C08F 2/01*** *(2006.01)*      ***C08F 220/06*** *(2006.01)*

(86) Internationale Anmeldenummer:
**PCT/EP2009/058246**

(87) Internationale Veröffentlichungsnummer:
**WO 2010/003855 (14.01.2010 Gazette 2010/02)**

(54) **VERFAHREN ZUR HERSTELLUNG WASSERABSORBIERENDER POLYMERPARTIKEL DURCH POLYMERISATION VON TROPFEN EINER MONOMERLÖSUNG**

METHOD FOR PRODUCING WATER-ABSORBING POLYMER PARTICLES BY POLYMERIZING DROPLETS OF A MONOMER SOLUTION

PROCÉDÉ DE PRODUCTION DE PARTICULES POLYMÈRES HYDRO-ABSORBANTES, PAR POLYMÉRISATION DE GOUTTES D'UNE SOLUTION MONOMÈRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **07.07.2008 EP 08159844**

(43) Veröffentlichungstag der Anmeldung:
**23.03.2011 Patentblatt 2011/12**

(73) Patentinhaber: **BASF SE**
**67056 Ludwigshafen (DE)**

(72) Erfinder:
• **KRÜGER, Marco**
**68219 Mannheim (DE)**
• **BLEI, Stefan**
**68163 Mannheim (DE)**
• **HEIDE, Wilfried**
**67251 Freinsheim (DE)**
• **WEISMANTEL, Matthias**
**63637 Jossgrund (DE)**
• **STUEVEN, Uwe**
**65812 Bad Soden (DE)**

(56) Entgegenhaltungen:
**WO-A1-2008/052971      WO-A2-2008/040714**
**WO-A2-2008/040715**

**Beschreibung**

Die vorliegende Erfindung betrifft ein Verfahren zur Herstellung wasserabsorbierender Polymerpartikel durch Polymerisation von Tropfen einer Monomerlösung in einer umgebenden Gasphase in einem Reaktionsraum, wobei die Monomerlösung über mindestens eine Bohrung in den Reaktionsraum dosiert wird.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Wasserabsorbierende Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet. Wasserabsorbierende Polymere werden auch als "superabsorbent polymers" bzw. "Superabsorber" bezeichnet.

Durch Sprühpolymerisation können die Verfahrensschritte Polymerisation und Trocknung zusammengefasst werden. Zusätzlich kann die Partikelgröße durch geeignete Verfahrensführung in gewissen Grenzen eingestellt werden.

Die Herstellung wasserabsorbierender Polymerpartikel durch Polymerisation von Tropfen einer Monomerlösung wird beispielsweise in EP 0 348 180 A1, EP 0 816 383 A1, WO 96/40427 A1, US 4,020,256, US 2002/0193546, DE 35 19 013 A1, WO 2008/040715 A2 und WO 2008/052971 A1 beschrieben.

WO 2008/040715 A2 beschreibt ein Sprühpolymerisationsverfahren mit einer definierten Verweilzeit des Initiators in der Monomerlösung vor der Tropfenerzeugung.

WO 2008/052971 A1 beschreibt ein Sprühpolymerisationsverfahren mit spezieller Temperaturregelung.

Aufgabe der vorliegenden Erfindung war die Bereitstellung eines verbesserten Verfahrens zur Herstellung wasserabsorbierender Polymerpartikel durch Polymerisation von Tropfen einer Monomerlösung in einer die Tropfen umgebenden Gasphase.

Insbesondere war es eine Aufgabe der vorliegenden Erfindung ein Verfahren zur Herstellung wasserabsorbierender Polymerpartikel mit enger monomodaler Partikelgrößenverteilung und hohem Schüttgewicht bereitzustellen.

Gelöst wurde die Aufgabe durch ein Verfahren zur Herstellung wasserabsorbierender Polymerpartikel durch Polymerisation von Tropfen einer Monomerlösung, enthaltend

    a) mindestens ein ethylenisch ungesättigtes, säuregruppentragendes Monomer, das zumindest teilweise neutralisiert sein kann,

    b) mindestens einen Vernetzer,

    d) mindestens einen Initiator und

    e) Wasser,

in einer umgebenden Gasphase in einem Reaktionsraum, wobei die Monomerlösung über mindestens eine Bohrung in den Reaktionsraum dosiert wird, dadurch gekennzeichnet, dass der Durchmesser je Bohrung 210 bis 290 $\mu$m und die Dosiergeschwindigkeit je Bohrung 0,9 bis 5 kg/h beträgt.

Die Dosiergeschwindigkeit je Bohrung (in kg/h) beträgt vorzugsweise mindestens

$$-1{,}9269 \cdot 10^{-7}\, x^3 + 2{,}3433 \cdot 10^{-4}\, x^2 - 5{,}4364 \cdot 10^{-2}\, x + 3{,}7719,$$

wobei x der Durchmesser je Bohrung (in $\mu$m) ist.

Die Dosiergeschwindigkeit je Bohrung (in kg/h) beträgt vorzugsweise höchstens

$$5{,}5158 \cdot 10^{-8}\, x^4 - 5{,}5844 \cdot 10^{-5}\, x^3 + 2{,}0635 \cdot 10^{-2}\, x^2 - 3{,}2606\, x + 1{,}8698 \cdot 10^2,$$

wobei x ebenfalls der Durchmesser je Bohrung (in $\mu$m) ist.

Der Durchmesser der Bohrung und die Dosiergeschwindigkeit je Bohrung werden so ausgewählt, dass die erhaltenen Tropfen einen mittleren Durchmesser vorzugsweise von 300 bis 700 $\mu$m, besonders bevorzugt von 350 bis 650 $\mu$m, ganz besonders bevorzugt von 400 bis 600 $\mu$m, aufweisen. Der mittlere Tropfendurchmesser wird durch Laserbeugung bestimmt, beispielsweise mit dem Malvern Insitec® S (Malvern Instruments Ltd.; Malvern; UK). Der mittlere Tropfendurchmesser sinkt bei gleich bleibendem Durchmesser der Bohrung mit steigender Dosiergeschwindigkeit je Bohrung.

Die Monomerlösung hat bei 20°C eine dynamische Viskosität von vorzugsweise 0,002 bis 0,02 Pa·s, besonders bevorzugt von 0,004 bis 0,015 Pa·s, ganz besonders bevorzugt von 0,005 bis 0,01 Pa·s. Mit steigender dynamischer Viskosität steigt der mittlere Tropfendurchmesser.

Die Monomerlösung hat bei 20°C eine Dichte von vorzugsweise 1 bis 1,3 g/cm$^3$, besonders bevorzugt 1,05 bis 1,25 g/cm$^3$, besonders bevorzugt 1,1 bis 1,2 g/cm$^3$.

Die Monomerlösung hat bei 20°C eine Oberflächenspannung von 0,02 bis 0,06 N/m, besonders bevorzugt 0,03 bis 0,05 N/m, besonders bevorzugt 0,035 bis 0,045 N/m. Mit steigender Oberflächenspannung steigt der mittlere Tropfendurchmesser zu.

Die Temperatur der Monomerlösung beim Durchtritt durch die Bohrung beträgt vorzugsweise 10 bis 60°C, besonders bevorzugt 15 bis 50°C, ganz besonders bevorzugt 20 bis 40°C.

Der vorliegenden Erfindung liegt die Erkenntnis zugrunde, dass mit steigendem Durchmesser der Bohrungen und überproportionaler Erhöhung der Dosiergeschwindigkeit je Bohrung die mittlere Tropfengröße konstant gehalten werden kann und gleichzeitig das Schüttgewicht der erhaltenen wasserabsorbierenden Polymerpartikel steigt. Wasserabsorbierende Polymerpartikel mit höherem Schüttgewicht beanspruchen weniger Volumen und lassen sich schneller dosieren.

Eine zu hohe Dosiergeschwindigkeit führt zu einer bimodalen Tropfengrößenverteilung und damit zu einem erhöhten Anteil an wasserabsorbierenden Polymerpartikeln mit unerwünscht kleinem Partikeldurchmesser.

Die wasserabsorbierenden Polymerpartikel sind üblicherweise wasserunlöslich.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 35 g/100 g Wasser.

Geeignete Monomere a) sind beispielsweise ethylenisch ungesättigte Carbonsäuren, wie Acrylsäure, Methacrylsäure, und Itaconsäure. Besonders bevorzugte Monomere sind Acrylsäure und Methacrylsäure. Ganz besonders bevorzugt ist Acrylsäure.

Weitere geeignete Monomere a) sind beispielsweise ethylenisch ungesättigte Sulfonsäuren, wie Styrolsulfonsäure und 2-Acrylamido-2-methylpropansulfonsäure (AMPS).

Verunreinigungen können einen erheblichen Einfluss auf die Polymerisation haben. Daher sollten die eingesetzten Rohstoffe eine möglichst hohe Reinheit aufweisen. Es ist daher oft vorteilhaft die Monomeren a) speziell zu reinigen. Geeignete Reinigungsverfahren werden beispielsweise in der WO 2002/055469 A1, der WO 2003/078378 A1 und der WO 2004/035514 A1 beschrieben. Ein geeignetes Monomer a) ist beispielsweise eine gemäß WO 2004/035514 A1 gereinigte Acrylsäure mit 99,8460 Gew.-% Acrylsäure, 0,0950 Gew.-% Essigsäure, 0,0332 Gew.-% Wasser, 0,0203 Gew.-% Propionsäure, 0,0001 Gew.-% Furfurale, 0,0001 Gew.-% Maleinsäureanhydrid, 0,0003 Gew.-% Diacrylsäure und 0,0050 Gew.-% Hydrochinonmonomethylether.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Säuregruppen der Monomere a) sind üblicherweise teilweise neutralisiert, vorzugsweise zu 25 bis 85 mol-%, bevorzugt zu 50 bis 80 mol-%, besonders bevorzugt 60 bis 75 mol-%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumcarbonat oder Natriumhydrogencarbonat sowie deren Mischungen. Üblicherweise wird die Neutralisation durch Einmischung des Neutralisationsmittels als wässrige Lösung, als Schmelze, oder bevorzugt auch als Feststoff erreicht. Beispielsweise kann Natriumhydroxid mit einem Wasseranteil deutlich unter 50 Gew.-% als wachsartige Masse mit einem Schmelzpunkt oberhalb 23°C vorliegen. In diesem Fall ist eine Dosierung als Stückgut oder Schmelze bei erhöhter Temperatur möglich.

Die Monomere a) enthalten üblicherweise Polymerisationsinhibitoren, vorzugsweise Hydrochinonhalbether, als Lagerstabilisator.

Die Monomerlösung enthält vorzugsweise bis zu 250 Gew.-ppm, bevorzugt höchstens 130 Gew.-ppm, besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf das unneutralisierte Monomer a). Beispielsweise kann zur Herstellung der Monomerlösung ein ethylenisch ungesättigtes, säuregruppentragendes Monomer mit einem entsprechenden Gehalt an Hydrochinonhalbether verwendet werden. Die Hydrochinonhalbether können aber auch durch Absorption, beispielsweise an Aktivkohle, aus der Monomerlösung entfernt werden.

Bevorzugte Hydrochinonhalbether sind Hydrochinonmonomethylether (MEHQ) und/oder alpha-Tocopherol (Vitamin E).

Geeignete Vernetzer b) sind Verbindungen mit mindestens zwei zur Vernetzung geeigneten Gruppen. Derartige Gruppen sind beispielsweise ethylenisch ungesättigte Gruppen, die in die Polymerkette radikalisch einpolymerisiert werden können, und funktionelle Gruppen, die mit den Säuregruppen des Monomeren a) kovalente Bindungen ausbilden können. Weiterhin sind auch polyvalente Metallsalze, die mit mindestens zwei Säuregruppen des Monomeren a) koordinative Bindungen ausbilden können, als Vernetzer b) geeignet.

Vernetzer b) sind vorzugsweise Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Polyethylenglykoldiacrylat, Allylmethacrylat, Trimethylolpropantriacrylat, Triallylamin, Tetraallylammoniumchlorid, Tetraallyloxyethan, wie in EP 0 530 438 A1 beschrieben, Di- und Triacrylate, wie in EP 0 547 847 A1, EP 0 559 476 A1, EP 0 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/032962 A2 beschrieben.

Bevorzugte Vernetzer b) sind Pentaerythrittriallylether, Tetraalloxyethan, Methylenbismethacrylamid, 15-fach ethoxiliertes Trimethylolpropantriacrylat, Polyethylenglykoldiacrylat, Trimethylolpropantriacrylat und Triallylamin.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3-bis 5-fach ethoxylierten und/oder propoxylierten Glyzerins, insbesondere das Triacrylat des 3-fach ethoxylierten Glyzerins.

Die Menge an Vernetzer b) beträgt vorzugsweise 0,01 bis 1,5 Gew.-%, besonders bevorzugt 0,05 bis 1 Gew.-%, ganz besonders bevorzugt 0,1 bis 0,6 Gew.-%, jeweils bezogen auf Monomer a). Mit steigendem Vernetzergehalt sinkt die Zentrifugenretentionskapazität (CRC) und die Absorption unter einem Druck von 21,0 $g/cm^2$ (AUL0.3psi) durchläuft ein Maximum.

Als Initiatoren c) können sämtliche unter den Polymerisationsbedingungen in Radikale zerfallende Verbindungen eingesetzt werden, beispielsweise Peroxide, Hydroperoxide, Wasserstoffperoxid, Persulfate, Azoverbindungen und die so genannten Redoxinitiatoren. Bevorzugt ist der Einsatz von wasserlöslichen Initiatoren. In manchen Fällen ist es vorteilhaft, Mischungen verschiedener Initiatoren zu verwenden, beispielsweise Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden.

Besonders bevorzugte Initiatoren c) sind Azoinitiatoren, wie 2,2'-Azobis[2-(2-imidazolin-2-yl)propan]dihydrochlorid und 2,2'-Azobis[2-(5-methyl-2-imidazolin-2-yl)propan]dihydrochlorid, und Photoinitiatoren, wie 2-Hydroxy-2-methylpropiophenon und 1-[4-(2-Hydroxyethoxy)-phenyl]-2-hydroxy-2-methyl-1-propan-1-on, Redoxinitiatoren, wie Natriumpersulfat/ Hydroxymethylsulfinsäure, Ammoniumperoxodisulfat/Hydroxymethylsulfinsäure, Wasserstoffperoxid/Hydroxymethylsulfinsäure, Natriumpersulfat/Ascorbinsäure, Ammoniumperoxodisulfat/Ascorbinsäure und Wasserstoffperoxid/Ascorbinsäure, Photoinitiatoren, wie 1-[4-(2-Hydroxyethoxy)-phenyl]-2-hydroxy-2-methyl-1-propan-1-on, sowie deren Mischungen.

Die Initiatoren werden in üblichen Mengen eingesetzt, beispielsweise in Mengen von 0,001 bis 5 Gew.-%, vorzugsweise 0,01 bis 2 Gew.-%, bezogen auf die Monomeren a).

Der Wassergehalt der Monomerlösung beträgt vorzugsweise weniger als 65 Gew.-%, bevorzugt weniger als 62 Gew.-%, besonders bevorzugt weniger als 60 Gew.-%, ganz besonders bevorzugt weniger als 58 Gew.-%.

Die Monomerlösung wird mittels mindestens einer Bohrung unter Ausbildung von Tropfen in den Reaktionsraum dosiert. Die Bohrungen können sich beispielsweise in einer Vertropferplatte befinden.

Eine Vertropferplatte ist eine Platte mit mindestens einer Bohrung, wobei die Flüssigkeit von oben durch die Bohrung tritt. Die Vertropferplatte bzw. die Flüssigkeit kann in Schwingungen versetzt werden, wodurch an der Unterseite der Vertropferplatte je Bohrung eine idealerweise monodisperse Tropfenkette erzeugt wird. In einer bevorzugten Ausführungsform wird die Vertropferplatte nicht angeregt.

Die Anzahl und die Größe der Bohrungen werden gemäß der gewünschten Kapazität und Tropfengröße ausgewählt. Der Tropfendurchmesser beträgt dabei üblicherweise das 1,9-fache des Durchmessers der Bohrung. Wichtig ist hierbei, dass die zu vertropfende Flüssigkeit nicht zu schnell durch die Bohrung tritt bzw. der Druckverlust über die Bohrung nicht zu groß ist. Ansonsten wird die Flüssigkeit nicht vertropft, sondern der Flüssigkeitsstrahl wird infolge der hohen kinetischen Energie zerrissen (versprüht). Die Reynoldszahl bezogen auf den Durchsatz pro Bohrung und den Bohrungsdurchmesser ist vorzugsweise kleiner als 2.000, bevorzugt kleiner 1.600, besonders bevorzugt kleiner 1.400, ganz besonders bevorzugt kleiner 1.200.

Die Vertropferplatte weist üblicherweise mindestens eine, vorzugsweise mindestens 10, besonders bevorzugt mindestens 50, und üblicherweise bis zu 10.000, vorzugsweise bis zu 5.000, besonders bevorzugt bis zu 1.000, Bohrungen auf, wobei die Bohrungen üblicherweise gleichmäßig über die Vertropferplatte verteilt sind, vorzugsweise in der so genannten Dreiecksteilung, d.h. jeweils drei Bohrungen bilden die Ecken eines gleichseitigen Dreiecks.

Der Abstand der Bohrungen beträgt vorzugsweise 1 bis 50 mm, besonders bevorzugt 2,5 bis 20 mm, ganz besonders bevorzugt 5 bis 10 mm.

Der Polymerisationsreaktor wird von einem Gas durchströmt. Dabei kann das Trägergas im Gleichstrom oder im Gegenstrom zu den frei fallenden Tropfen der Monomerlösung durch den Reaktionsraum geführt werden, bevorzugt im Gleichstrom, d.h. von oben nach unten. Vorzugsweise wird das Gas nach einem Durchgang zumindest teilweise, bevorzugt zu mindestens 50%, besonders bevorzugt zu mindestens 75%, als Kreisgas in den Reaktionsraum zurückgeführt. Üblicherweise wird eine Teilmenge des Trägergases nach jedem Durchgang ausgeschleust, vorzugsweise bis zu 10%, besonders bevorzugt bis zu 3%, ganz besonders bevorzugt bis zu 1 %.

Der Sauerstoffgehalt des Trägergases beträgt vorzugsweise von 0,5 bis 15 Vol.-%, besonders bevorzugt von 1 bis 10 Vol.-%, ganz besonders bevorzugt von 2 bis 7 Vol.-%.

Das Trägergas enthält neben Sauerstoff vorzugsweise Stickstoff. Der Stickstoffgehalt des Trägergases beträgt vorzugsweise mindestens 80 Vol.-%, besonders bevorzugt mindesten 90 Vol.-%, ganz besonders bevorzugt mindestens 95 Vol.-%.

Die Gasgeschwindigkeit wird vorzugsweise so eingestellt, dass die Strömung im Polymerisationsreaktor gerichtet ist, beispielsweise liegen keine der allgemeinen Strömungsrichtung entgegen gesetzte Konvektionswirbel vor, und beträgt beispielsweise 0,01 bis 5 m/s, vorzugsweise 0,02 bis 4 m/s, besonders bevorzugt 0,05 bis 3 m/s, ganz besonders bevorzugt 0,1 bis 2 m/s.

Das den Reaktor durchströmende Gas wird zweckmäßigerweise vor dem Reaktor auf die Reaktionstemperatur vorgewärmt.

Die Gaseingangstemperatur, d.h. die Temperatur mit der das Gas in den Reaktionsraum eintritt, beträgt vorzugsweise von 160 bis 250°C, besonders bevorzugt von 180 bis 230°C, ganz besonders bevorzugt von 190 bis 220°C.

Vorteilhaft wird die Gaseintrittstemperatur so geregelt, dass die Gasaustrittstemperatur, d.h. die Temperatur mit der das Gas den Reaktionsraum verlässt von 100 bis 180°C, besonders bevorzugt von 110 bis 160°C, ganz besonders bevorzugt von 120 bis 140°C, beträgt.

Die Reaktion kann im Überdruck oder im Unterdruck durchgeführt werden, ein Unterdruck von bis zu 100 mbar gegenüber dem Umgebungsdruck ist bevorzugt.

Das Reaktionsabgas, d.h. das der Reaktionsraum verlassende Gas, kann beispielsweise in einem Wärmeaustauscher abgekühlt werden. Dabei kondensieren Wasser und nicht umgesetztes Monomer a). Danach kann das Reaktionsabgas zumindest teilweise wieder aufgewärmt und als Kreisgas in den Reaktor zurückgeführt werden. Ein Teil des Reaktionsabgases kann ausgeschleust und durch frisches Gas ersetzt werden, wobei im Reaktionsabgas enthaltenes Wasser und nicht umgesetzte Monomere a) abgetrennt und rückgeführt werden können.

Besonders bevorzugt ist ein Wärmeverbund, dass heißt, ein Teil der Abwärme beim Abkühlen des Abgases wird zum Aufwärmen des Kreisgases verwendet.

Die Reaktoren können begleit beheizt werden. Die Begleitheizung wird dabei so eingestellt, dass die Wandtemperatur mindestens 5°C oberhalb der Reaktorinnentemperatur liegt und die Kondensation an den Reaktorwänden zuverlässig vermieden wird.

Die Polymerpartikel können zur weiteren Verbesserung der Eigenschaften nachvernetzt werden. Geeignete Nachvernetzer sind Verbindungen, die Gruppen enthalten, die mit mindestens zwei Carboxylatgruppen der Polymerpartikel kovalente Bindungen bilden können. Geeignete Verbindungen sind beispielsweise polyfunktionelle Amine, polyfunktionelle Amidoamine, polyfunktionelle Epoxide, wie in EP 0 083 022 A2, EP 0 543 303 A1 und EP 0 937 736 A2 beschrieben, di- oder polyfunktionelle Alkohole, wie in DE 33 14 019 A1, DE 35 23 617 A1 und EP 0 450 922 A2 beschrieben, oder β-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/031482 A1 Morpholin-2,3-dion und dessen Derivate als geeignete Nachvernetzer beschrieben.

Bevorzuge Nachvernetzer sind Ethylenkarbonat, Ethylenglykoldiglycidylether, Umsetzungsprodukte von Polyamiden mit Epichlorhydrin und Gemische aus Propylenglykol und 1,4-Butandiol.

Ganz besonders bevorzugte Nachvernetzer sind 2-Hydroxyethyloxazolidin-2-on, Oxazolidin-2-on und 1,3-Propandiol.

Weiterhin können auch Nachvernetzer eingesetzt werden, die zusätzliche polymerisierbare ethylenisch ungesättigte Gruppen enthalten, wie in DE 37 13 601 A1 beschrieben

Die Menge an Nachvernetzer beträgt vorzugsweise 0,001 bis 2 Gew.-%, besonders bevorzugt 0,02 bis 1 Gew.-%, ganz besonders bevorzugt 0,05 bis 0,2 Gew.-%, jeweils bezogen auf die Polymerpartikel.

In einer bevorzugten Ausführungsform der vorliegenden Erfindung werden vor, während oder nach der Nachvernetzung zusätzlich zu den Nachvernetzern polyvalente Kationen auf die Partikeloberfläche aufgebracht.

Die im erfindungsgemäßen Verfahren einsetzbaren polyvalenten Kationen sind beispielsweise zweiwertige Kationen, wie die Kationen von Zink, Magnesium, Kalzium, Eisen und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat und Lactat, möglich. Aluminiumsulfat und Aluminiumlaktat sind bevorzugt. Außer Metallsalzen können auch Polyamine als polyvalente Kationen eingesetzt werden.

Die Einsatzmenge an polyvalentem Kation beträgt beispielsweise 0,001 bis 1,5 Gew.-%, vorzugsweise 0,005 bis 1 Gew.-%, besonders bevorzugt 0,02 bis 0,8 Gew.-%. jeweils bezogen auf die Polymerpartikel.

Die Nachvernetzung wird üblicherweise so durchgeführt, dass eine Lösung des Nachvernetzers auf die getrockneten Polymerpartikel aufgesprüht wird. Im Anschluss an das Aufsprühen werden die mit Nachvernetzer beschichteten Polymerpartikel thermisch getrocknet, wobei die Nachvernetzungsreaktion sowohl vor als auch während der Trocknung stattfinden kann.

Das Aufsprühen einer Lösung des Nachvernetzers wird vorzugsweise in Mischern mit bewegten Mischwerkzeugen, wie Schneckenmischer, Scheibenmischer und Schaufelmischer, durchgeführt werden. Es ist aber auch möglich die Nachvernetzerlösung in einem Wirbelbett aufzusprühen. Besonders bevorzugt sind Horizontalmischer, wie Schaufelmischer, ganz besonders bevorzugt sind Vertikalmischer. Die Unterscheidung in Horizontalmischer und Vertikalmischer erfolgt über die Lagerung der Mischwelle, d.h. Horizontalmischer haben eine horizontal gelagerte Mischwelle und Vertikalmischer haben eine vertikal gelagerte Mischwelle. Geeignete Mischer sind beispielsweise Horizontale Pfluschar® Mischer (Gebr. Lödige Maschinenbau GmbH; Paderborn; DE), Vrieco-Nauta Continuous Mixer (Hosokawa Micron BV; Doetinchem; NL), Processall Mixmill Mixer (Processall Incorporated; Cincinnati; US) und Schugi Flexomix® (Hosokawa Micron BV; Doetinchem; NL).

Die Nachvernetzer werden typischerweise als wässrige Lösung eingesetzt. Über den Gehalt an nichtwässrigem Lösungsmittel bzw. Gesamtlösungsmittelmenge kann die Eindringtiefe des Nachvernetzers in die Polymerpartikel eingestellt werden.

Wird ausschließlich Wasser als Lösungsmittel verwendet, so wird vorteilhaft ein Tensid zugesetzt. Dadurch wird das Benetzungsverhalten verbessert und die Verklumpungsneigung vermindert. Vorzugsweise werden aber Lösungsmittelgemische eingesetzt, beispielsweise Isopropanol/Wasser, 1,3-Propandiol/Wasser und Propylenglykol/Wasser, wobei das Mischungsmassenverhältnis vorzugsweise von 20:80 bis 40:60 beträgt.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Hosokawa Bepex® Horizontal Paddle Dryer (Hosokawa Micron GmbH; Leingarten; DE), Hosokawa Bepex® Disc Dryer (Hosokawa Micron GmbH; Leingarten; DE) und Nara Paddle Dryer (NARA Machinery Europe; Frechen; DE). Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250°C, bevorzugt 120 bis 220°C, besonders bevorzugt 130 bis 210°C, ganz besonders bevorzugt 150 bis 200°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten, und üblicherweise höchstens 60 Minuten.

Die nachvernetzten Polymerpartikel können zur weiteren Verbesserung der Eigenschaften beschichtet oder nachbefeuchtet werden. Geeignete Beschichtungen zur Verbesserung der Anquellgeschwindigkeit sowie der Permeabilität (SFC) sind beispielsweise anorganische inerte Substanzen, wie wasserunlösliche Metallsalze, organische Polymere, kationische Polymere sowie zwei- oder mehrwertige Metallkationen. Geeignete Beschichtungen zur Staubbindung sind beispielsweise Polyole. Geeignete Beschichtungen gegen die unerwünschte Verbackungsneigung der Polymerpartikel sind beispielsweise pyrogene Kieselsäure, wie Aerosil® 200, und Tenside, wie Span® 20. Geeignete Beschichtungen zur Verbesserung der Farbstabilität (Vergilbungsstabilität) sind beispielsweise Reduktionsmittel, wie Natriumhypophosphit, Natriumsulfit, Natriumhydogensulfit, Brüggolite® FF6 und Brüggolite® FF7 (Brüggemann Chemicals; Heilbronn; DE).

Ein weiterer Gegenstand der vorliegenden Erfindung sind gemäß dem erfindungsgemäßen Verfahren erhältliche wasserabsorbierende Polymerpartikel.

Die gemäß dem erfindungsgemäßen Verfahren erhältlichen wasserabsorbierenden Polymerpartikel weisen einen Feuchtegehalt von typischerweise mindestens 10 Gew.-%, vorzugsweise mindestens 12 Gew.-%, besonders bevorzugt mindestens 14 Gew.-%, ganz besonders bevorzugt mindestens 15 Gew.-% und üblicherweise weniger als 20 Gew.-%, auf.

Die gemäß dem erfindungsgemäßen Verfahren erhältlichen wasserabsorbierenden Polymerpartikel weisen ein Schüttgewicht von typischerweise mindestens 0,55 g/cm$^3$, vorzugsweise mindestens 0,57 g/cm$^3$, besonders bevorzugt mindestens 0,59 g/cm$^3$, ganz besonders bevorzugt mindestens 0,6 g/cm$^3$ üblicherweise weniger als 0,75 g/cm$^3$, auf.

Der mittlere Durchmesser der gemäß dem erfindungsgemäßen Verfahren erhältlichen wasserabsorbierenden Polymerpartikel beträgt vorzugsweise 300 bis 450 $\mu$m, besonders bevorzugt von 320 bis 420 $\mu$m, ganz besonders von 340 bis 400 $\mu$m.

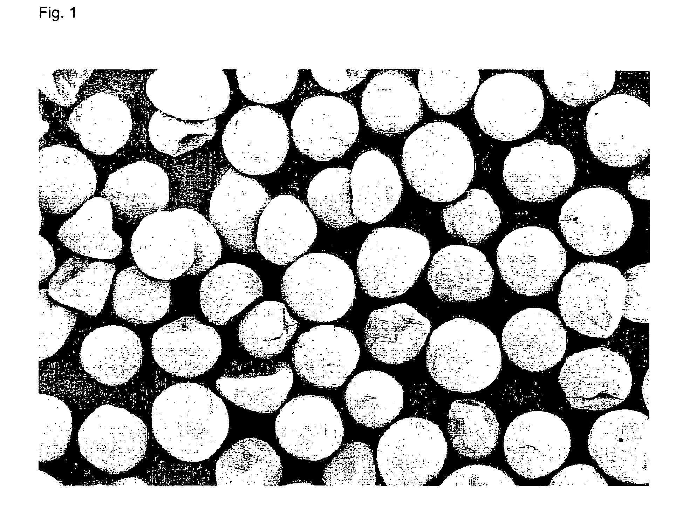

Die gemäß dem erfindungsgemäßen Verfahren erhältlichen wasserabsorbierenden Polymerpartikel haben üblicherweise die Form von, teilweise eingedrückten, Hohlkugeln (Fig. 1) und sind annähernd rund, d.h. die Polymerpartikel weisen eine mittlere Sphärizität (mSPHT) von typischerweise mindestens 0,84, vorzugsweise mindestens 0,86, besonders bevorzugt mindestens 0,88, ganz besonders bevorzugt mindestens 0,9, auf. Die Sphärizität (SPHT) ist definiert als

$$SPHT = \frac{4\pi A}{U^2},$$

wobei A die Querschnittsfläche und U der Querschnittsumfang der Polymerpartikel ist. Die mittlere Sphärizität (mSPHT) ist die volumengemittelte Sphärizität.

Die mittlere Sphärizität (mSPHT) kann beispielsweise mit dem Bildanalysesystem Camsizer® (Retsch Technolgy GmbH; DE) bestimmt werden.

Polymerpartikel mit relativ niedriger mittlerer Sphärizität (mSPHT) werden durch umgekehrte Suspensionspolymerisation erhalten, wenn die Polymerpartikel während oder nach der Polymerisation agglomeriert werden.

Die durch übliche Lösungspolymerisation (Gelpolymerisation) hergestellten wasserabsorbierenden Polymerpartikel werden nach der Trocknung gemahlen und klassiert wobei unregelmäßige Polymerpartikel erhalten werden. Die mittlere Sphärizität (mSPHT) dieser Polymerpartikel beträgt zwischen ca. 0,72 und ca. 0,78.

Die gemäß dem erfindungsgemäßen Verfahren erhältlichen wasserabsorbierenden Polymerpartikel weisen eine Zentrifugenretentionskapazität (CRC) von typischerweise mindestens 15 g/g, vorzugsweise mindestens 20 g/g, bevorzugt mindestens 25 g/g, besonders bevorzugt mindestens 30 g/g, ganz besonders bevorzugt mindestens 35 g/g, auf. Die Zentrifugenretentionskapazität (CRC) der wasserabsorbierenden Polymerpartikel beträgt üblicherweise weniger als 100 g/g. Die Zentrifugenretentionskapazität der wasserabsorbierenden Polymerpartikel wird gemäß der von der EDANA (European Disposables and Nonwovens Association) empfohlenen Testmethode Nr. WSP 241.2-05 "Centrifuge retention capacity" bestimmt.

Die wasserabsorbierenden Polymerpartikel werden mittels der nachfolgend beschriebenen Testmethoden geprüft.

Methoden:

Die Messungen sollten, wenn nicht anders angegeben, bei einer Umgebungstemperatur von 23 ± 2 °C und einer relativen Luftfeuchte von 50 ± 10 % durchgeführt werden. Die wasserabsorbierenden Polymerpartikel werden vor der Messung gut durchmischt.

mittlere Tropfengröße

Die mittlere Tropfengröße der Monomerlösung (D50) ist die Tropfengröße für die gilt, dass gerade 50 Vol.-% der Tropfen kleiner sind als dieser Wert, und wird einem Malvern Insitec® S (Malvern Instruments Ltd.; Malvern; GB) bestimmt. Es wird eine 450 mm Linse und die Steuerungs- und Auswertesoftware "RTSizer" verwendet. Der Messbereich wird auf 0,1 bis 2.000 μm eingestellt. Der Abstand Vertropferplatte/Laserstrahl beträgt 1,05 m und der Abstand Tropfen/Linse beträgt 15 cm.

Verteilungsbreite der Tropfengröße

Die Verteilungsbreite der Tropfengröße (SPAN) ist

$$SPAN = \frac{D90 - D10}{D50},$$

wobei D10 die Tropfengröße ist für die gilt, dass gerade 10 Vol.-% der Tropfen kleiner sind als dieser Wert, D50 die Tropfengröße ist für die gilt, dass gerade 50 Vol.-% der Tropfen kleiner sind als dieser Wert, und D90 die Tropfengröße ist für die gilt, dass gerade 90 Vol.-% der Tropfen kleiner sind als dieser Wert. Hierbei entspricht eine Verteilungsbreite von 0 einer monodispersen Tropfenkette. Die Verteilungsbreite wird einem Malvern Insitec® S (Malvern Instruments Ltd.; Malvern; GB) bestimmt. Es wird eine 450 mm Linse und die Steuerungs- und Auswertesoftware "RTSizer" verwendet. Der Messbereich wird auf 0,1 bis 2.000 μm eingestellt. Der Abstand Vertropferplatte/Laserstrahl beträgt 1,05 m und der Abstand Tropfen/Linse beträgt 15 cm.

mittlere Partikelgröße (Particle Size Distribution)

Der mittlere Partikelgröße der wasserabsorbierenden Polymerpartikel wird gemäß der von der EDANA (European Disposables and Nonwovens Association) empfohlenen Testmethode Nr. WSP 220.2-05 "Particle Size Distribution" bestimmt.

Feuchtegehalt (Moisture Content)

Der Feuchtegehalt der wasserabsorbierenden Polymerpartikel wird gemäß der von der EDANA (European Disposables and Nonwovens Association) empfohlenen Testmethode Nr. WSP 230.2-05 "Moisture content" bestimmt.

Zentrifugenretentionskapazität (Centrifuge Retention Capacity)

Die Zentrifugenretentionskapazität (CRC) wird gemäß der von der EDANA (European Disposables and Nonwovens Association) empfohlenen Testmethode Nr. WSP 241.2-05 "Centrifuge Retention Capacity" bestimmt.

Absorption unter einem Druck von 49,2 g/cm$^2$ (Absorption under Pressure)

Die Absorption unter einem Druck von 49,2 g/cm$^2$ (AUL0.7psi) wird analog der von der EDANA (European Disposables and Nonwovens Association) empfohlenen Testmethode Nr. WSP 242.2-05 "Absorption under Pressure" bestimmt, wobei statt eines Drucks von 21,0 g/cm$^2$ ein Druck von 49,2 g/cm$^2$ eingestellt wird.

Schüttgewicht (Density)

Das Schüttgewicht wird gemäß der von der EDANA (European Disposables and Nonwovens Association) empfohlenen Testmethode Nr. WSP 260.2-05 "Density" bestimmt.
Die EDANA-Testmethoden sind beispielsweise erhältlich bei der European Disposables and Nonwovens Association, Avenue Eugène Plasky 157, B-1030 Brüssel, Belgien.

Beispiele:

Beispiel 1

Eine Monomerlösung, enthaltend 31,6 Gew.-% Natriumacrylat, 9,9 Gew.-% Acrylsäure, 0,17 Gew.-% 2,2'-Azobis[2-(2-imidazolin-2-yl)propan]dihydrochlorid, 0,085 Gew.-% Natriumperoxodisulfat, 0,058 Gew.-% 3-fach ethoxiliertes Glyzerintriacrylat (ca. 85 gew.-%ig) und Wasser, wurde vertropft. Die als Vertropfer eingesetzten Lochplatten hatten 6 Bohrungen à 200 μm, 13 Bohrungen à 230 μm, 9 Bohrungen à 250 μm, 3 Bohrungen à 270 μm bzw. 2 Bohrungen à 290 μm.
Die erzeugten Tropfen wurden analysiert. Die Ergebnisse sind in Tabelle 1 zusammengefasst.

Tabelle 1: Analyse des "Sprühbildes"

| Durchmesser der Bohrung | Dosiergeschwindigkeit je Bohrung | D50 | SPAN |
|---|---|---|---|
| 200 μm | 0,41 kg/h | 595 μm | 0,57 |
| 200 μm | 0,81 kg/h | 512 μm | 0,60 |
| 200 μm | 1,62 kg/h | 450 μm | 0,62 |
| 200 μm | 3,24 kg/h | 426 μm | 0,99 |
| 230 μm | 0,54 kg/h | 754 μm | 0,74 |
| 230 μm | 1,08 kg/h | 655 μm | 0,75 |
| 230 μm | 2,16 kg/h | 579 μm | 0,74 |
| 230 μm | 4,16 kg/h | 485 μm | 1,28 |
| 250 μm | 1,22 kg/h | 593 μm | 0,62 |
| 250 μm | 1,89 kg/h | 564 μm | 0,64 |
| 250 μm | 3,24 kg/h | 532 μm | 0,61 |
| 250 μm | 5,41 kg/h | 449 μm | 1,20 |

(fortgesetzt)

| Durchmesser der Bohrung | Dosiergeschwindigkeit je Bohrung | D50 | SPAN |
|---|---|---|---|
| 270 $\mu$m | 1,35 kg/h | 608 $\mu$m | 0,66 |
| 270 $\mu$m | 2,16 kg/h | 566 $\mu$m | 0,61 |
| 270 $\mu$m | 3,78 kg/h | 516 $\mu$m | 0,60 |
| 270 $\mu$m | 6,49 kg/h | 481 $\mu$m | 1,38 |
| 290 $\mu$m | 1,62 kg/h | 615 $\mu$m | 0,63 |
| 290 $\mu$m | 2,16 kg/h | 588 $\mu$m | 0,59 |
| 290 $\mu$m | 4,87 kg/h | 578 $\mu$m | 0,69 |
| 290 $\mu$m | 6,49 kg/h | 499 $\mu$m | 1,07 |

Die Ergebnisse zeigen, dass die Tropfengröße mit dem Durchmesser der Bohrung steigt und mit der steigender Dosiergeschwindigkeit fällt. Weiterhin existiert ein Bereich, in dem die Breite der Tropfengrößenverteilung (Span) unabhängig von der Dosiergeschwindigkeit ist. Oberhalb einer Grenzdosiergeschwindigkeit führt eine weitere Erhöhung der Dosiergeschwindigkeit zu einer bimodalen Tropfengrößenverteilung und einem signifikant erhöhtem Anteil an Tropfen mit einem Durchmesser von weniger als 100 $\mu$m.

Beispiel 2 (nicht erfindungsgemäß)

Eine Monomerlösung, enthaltend 31,6 Gew.-% Natriumacrylat, 9,9 Gew.-% Acrylsäure, 0,17 Gew.-% 2,2'-Azobis[2-(2-imidazolin-2-yl)propan]dihydrochlorid, 0,085 Gew.-% Natriumperoxodisulfat, 0,058 Gew.-% 3-fach ethoxiliertes Glyzerintriacrylat (ca. 85 gew.-%ig) und Wasser, wurde in einen erwärmten Vertropfungsturm vertropft (12m Höhe, 2m Breite, Gasgeschwindigkeit 0,1 m/s im Gleichstrom). Die Monomerlösung hatte bei 20°C eine dynamische Viskosität von 0,0065 Pa s, eine Dichte von 1,165 g/cm$^3$ und eine Oberflächenspannung von 0,039 N/m. Die Vertropferplatte hatte 20 Bohrungen à 200 $\mu$m. Die Dosiergeschwindigkeit der Mischung betrug 20,5 bis 28,0 kg/h. Die Heizleistung der Gasvorwärmung wurde so geregelt, dass die Gasausgangstemperatur im Vertropfungsturm konstant 130°C betrug.
Die erhaltenen wasserabsorbierenden Polymerpartikel wurden analysiert. Die Ergebnisse sind in Tabelle 3 zusammengefasst.

Beispiel 3

Es wurde verfahren wie unter Beispiel 2. Die Vertropferplatte hatte 9 Bohrungen à 230 $\mu$m. Die Dosiergeschwindigkeit der Mischung betrug 18,0 bis 22,0 kg/h.
Die erhaltenen wasserabsorbierenden Polymerpartikel wurden analysiert. Die Ergebnisse sind in Tabelle 3 zusammengefasst.

Beispiel 4

Es wurde verfahren wie unter Beispiel 2. Die Vertropferplatte hatte 6 Bohrungen à 250 $\mu$m. Die Dosiergeschwindigkeit der Mischung betrug 18,0 bis 20,5 kg/h.
Die erhaltenen wasserabsorbierenden Polymerpartikel wurden analysiert. Die Ergebnisse sind in Tabelle 3 zusammengefasst.

Beispiel 5

Es wurde verfahren wie unter Beispiel 2. Die Vertropferplatte hatte 3 Bohrungen à 270 $\mu$m. Die Dosiergeschwindigkeit der Mischung betrug 13,0 bis 14,0 kg/h.
Die erhaltenen wasserabsorbierenden Polymerpartikel wurden analysiert. Die Ergebnisse sind in Tabelle 3 zusammengefasst.

Tabelle 2: Einstellungen

| Beispiel | Durchmesser der Bohrungen | Anzahl der Bohrungen | Dosiermenge | Dosiergeschwindigkeit je Bohrung |
|---|---|---|---|---|
| 2*) | 200 $\mu$m | 20 | 20,5 kg/h | 1,03 kg/h |

(fortgesetzt)

| Beispiel | Durchmesser der Bohrungen | Anzahl der Bohrungen | Dosiermenge | Dosiergeschwindigkeit je Bohrung |
|---|---|---|---|---|
| | 200 $\mu$m | 20 | 24,0 kg/h | 1,20 kg/h |
| | 200 $\mu$m | 20 | 28,0 kg/h | 1,40 kg/h |
| 3 | 230 $\mu$m | 9 | 18,0 kg/h | 2,00 kg/h |
| | 230 $\mu$m | 9 | 21,0 kg/h | 2,33 kg/h |
| | 230 $\mu$m | 9 | 22,0 kg/h | 2,44 kg/h |
| 4 | 250 $\mu$m | 6 | 18,0 kg/h | 3,00 kg/h |
| | 250 $\mu$m | 6 | 19,0 kg/h | 3,17 kg/h |
| | 250 $\mu$m | 6 | 20,5 kg/h | 3,42 kg/h |
| 5 | 270 $\mu$m | 3 | 13,0 kg/h | 4,33 kg/h |
| | 270 $\mu$m | 3 | 13,5 kg/h | 4,50 kg/h |
| | 270 $\mu$m | 3 | 14,0 kg/h | 4,67 kg/h |
| *) nicht erfindungsgemäß | | | | |

Tabelle 3: Ergebnisse

| Beispiel | CRC | AUL0.7psi | Schüttgewicht | Feuchtegehalt | mittlere Partikelgröße |
|---|---|---|---|---|---|
| 2*) | 30,2 g/g | 21,2 g/g | 0,50 g/cm$^3$ | 15,8 Gew.-% | 369 $\mu$m |
| | 30,2 g/g | 21,0 g/g | 0,50 g/cm$^3$ | 14,7 Gew.-% | 388 $\mu$m |
| | 32,3 g/g | 21,1 g/g | 0,51 g/cm$^3$ | 13,0 Gew.-% | 394 $\mu$m |
| 3 | 33,5 g/g | 22,2 g/g | 0,55 g/cm$^3$ | 15,3 Gew.-% | 387 $\mu$m |
| | 32,3 g/g | 22,0 g/g | 0,55 g/cm$^3$ | 14,1 Gew.-% | 379 $\mu$m |
| | 31,7 g/g | 21,8 g/g | 0,55 g/cm$^3$ | 14,0 Gew.-% | 384 $\mu$m |
| 4 | 31,8 g/g | 21,0 g/g | 0,58 g/cm$^3$ | 18,4 Gew.-% | 376 $\mu$m |
| | 30,7 g/g | 21,7 g/g | 0,59 g/cm$^3$ | 16,1 Gew.-% | 382 $\mu$m |
| | 32,4 g/g | 22,9 g/g | 0,59 g/cm$^3$ | 15,9 Gew.-% | 379 $\mu$m |
| 5 | 33,0 g/g | 23,1 g/g | 0,61 g/cm$^3$ | 14,7 Gew.-% | 366 $\mu$m |
| | 31,3 g/g | 22,9 g/g | 0,61 g/cm$^3$ | 16,3 Gew.-% | 370 $\mu$m |
| | 28,6 g/g | 20,8 g/g | 0,60 g/cm$^3$ | 18,2 Gew.-% | 372 $\mu$m |
| *) nicht erfindungsgemäß | | | | | |

Die Ergebnisse zeigen, dass mit steigendem Durchmesser der Bohrungen das Schüttgewicht steigt. Die übrigen Eigenschaften der wasserabsorbierenden Polymerpartikel bleiben unverändert.

**Patentansprüche**

1. Verfahren zur Herstellung wasserabsorbierender Polymerpartikel durch Polymerisation von Tropfen einer Monomerlösung, enthaltend

   a) mindestens ein ethylenisch ungesättigtes, säuregruppentragendes Monomer, das zumindest teilweise neutralisiert sein kann,
   b) mindestens einen Vernetzer,
   d) mindestens einen Initiator und
   e) Wasser,
   in einer umgebenden Gasphase in einem Reaktionsraum, wobei die Monomerlösung über mindestens eine Bohrung in den Reaktionsraum dosiert wird, **dadurch gekennzeichnet, dass** der Durchmesser je Bohrung 210 bis 290 $\mu$m und die Dosiergeschwindigkeit je Bohrung 0,9 bis 5 kg/h beträgt.

**2.** Verfahren gemäß Anspruch 1, **dadurch gekennzeichnet, dass** die Dosiergeschwindigkeit je Bohrung (in kg/h) mindestens

$$-1{,}9269 \cdot 10^{-7}\, x^3 + 2{,}3433 \cdot 10^{-4}\, x^2 - 5{,}4364 \cdot 10^{-2}\, x + 3{,}7719$$

beträgt, wobei x der Durchmesser je Bohrung (in $\mu$m) ist.

**3.** Verfahren gemäß Anspruch 1 oder 2, **dadurch gekennzeichnet, dass** die Dosiergeschwindigkeit je Bohrung (in kg/h) höchstens

$$5{,}5158 \cdot 10^{-8}\, x^4 - 5{,}5844 \cdot 10^{-5}\, x^3 + 2{,}0635 \cdot 10^{-2}\, x^2 - 3{,}2606\, x + 1{,}8698 \cdot 10^{2}$$

beträgt, wobei x der Durchmesser je Bohrung (in $\mu$m) ist.

**4.** Verfahren gemäß einem der Ansprüche 1 bis 3, **dadurch gekennzeichnet, dass** die Tropfen einen mittleren Durchmesser von 300 bis 700 $\mu$m aufweisen.

**5.** Verfahren gemäß einem der Ansprüche 1 bis 4, **dadurch gekennzeichnet, dass** die Monomerlösung bei 20°C eine dynamische Viskosität von 0,002 bis 0,02 Pa·s aufweist.

**6.** Verfahren gemäß einem der Ansprüche 1 bis 5, **dadurch gekennzeichnet, dass** die Monomerlösung bei 20°C eine Dichte von 1 bis 1,3 g/cm$^3$ aufweist.

**7.** Verfahren gemäß einem der Ansprüche 1 bis 6, **dadurch gekennzeichnet, dass** die Monomerlösung bei 20°C eine Oberflächenspannung von 0,02 bis 0,06 N/m aufweist.

**8.** Verfahren gemäß Anspruch 7, **dadurch gekennzeichnet, dass** die Temperatur der Monomerlösung beim Durchtritt durch die Bohrung 10 bis 60°C beträgt.

**9.** Verfahren gemäß einem der Ansprüche 1 bis 8, **dadurch gekennzeichnet, dass** die wasserabsorbierenden Polymerpartikel eine Zentrifugenretentionskapazität von mindesten 15 g/g aufweisen.

**10.** Wasserabsorbierende Polymerpartikel, erhältlich gemäß einem Verfahren der Ansprüche 1 bis 9, **dadurch gekennzeichnet, dass** die wasserabsorbierenden Polymerpartikel ein Schüttgewicht von mindestens 0,55 g/cm$^3$, einen mittleren Partikeldurchmesser von 300 bis 450 $\mu$m und einen Feuchtegehalt von mindestens 10 Gew.-% aufweisen.

**Claims**

**1.** A process for producing water-absorbing polymer particles by polymerizing droplets of a monomer solution comprising

a) at least one ethylenically unsaturated monomer which bears acid groups and may be at least partly neutralized,
b) at least one crosslinker,
d) at least one initiator and
e) water,
in a surrounding gas phase in a reaction chamber, the monomer solution being metered into the reaction chamber via at least one bore, wherein the diameter is from 210 to 290 $\mu$m per bore and the metering rate is from 0.9 to 5 kg/h per bore.

**2.** The process according to claim 1, wherein the metering rate per bore (in kg/h) is at least

$$-1.9269 \cdot 10^{-7}\, x^3 + 2.3433 \cdot 10^{-4}\, x^2 - 5.4364 \cdot 10^{-2}\, x + 3.7719$$

where x is the diameter per bore (in $\mu$m).

3. The process according to claim 1 or 2, wherein the metering rate per bore (in kg/h) is at most

$$5.5158 \cdot 10^{-8}\, x^4 - 5.5844 \cdot 10^{-5}\, x^3 + 2.0635 \cdot 10^{-2}\, x^2 - 3.2606\, x + 1.8698 \cdot 10^2$$

where x is the diameter per bore (in $\mu$m).

4. The process according to any one of claims 1 to 3, wherein the droplets have a mean diameter of from 300 to 700 $\mu$m.

5. The process according to any one of claims 1 to 4, wherein the monomer solution at 20°C has a dynamic viscosity of from 0.002 to 0.02 Pa·s.

6. The process according to any one of claims 1 to 5, wherein the monomer solution at 20°C has a density of from 1 to 1.3 g/cm$^3$.

7. The process according to any one of claims 1 to 6, wherein the monomer solution at 20°C has a surface tension of from 0.02 to 0.06 N/m.

8. The process according to claim 7, wherein the temperature of the monomer solution as it passes through the bore is from 10 to 60°C.

9. The process according to any one of claims 1 to 8, wherein the water-absorbing polymer particles have a centrifuge retention capacity of at least 15 g/g.

10. Water-absorbing polymer particles obtainable by a process of claims 1 to 9, which have a density of at least 0.55 g/cm$^3$, a mean particle diameter of from 300 to 450 $\mu$m and a moisture content of at least 10% by weight.

**Revendications**

1. Procédé pour la préparation de particules polymères absorbant l'eau par polymérisation de gouttes d'une solution de monomères, contenant

   a) au moins un monomère éthyléniquement insaturé, portant des groupes acides, qui peut être au moins partiellement neutralisé,
   b) au moins un agent de réticulation,
   d) au moins un initiateur et
   e) de l'eau,
   dans une phase gazeuse environnante dans un espace de réaction, la solution de monomères étant dosée via au moins un trou dans l'espace de réaction, **caractérisé en ce que** le diamètre par trou est de 210 à 290 $\mu$m et la vitesse de dosage par trou est de 0,9 à 5 kg/h.

2. Procédé selon la revendication 1, **caractérisé en ce que** la vitesse de dosage par trou (en kg/h) est d'au moins

$$-1{,}9269 * 10^{-7}\, x^3 + 2{,}3433 * 10^{-4}\, x^2 - 5{,}4364 * 10^{-2}\, x + 3{,}7719$$

x étant le diamètre par trou (en $\mu$m).

3. Procédé selon la revendication 1 ou 2, **caractérisé en ce que** la vitesse de dosage par trou (en kg/h) est d'au plus

$$5,5158 * 10^{-8} \, x^4 - 5,5844 * 10^{-5} \, x^3 + 2,0635 * 10^{-2} \, x^2 -$$
$$3,2606 \, x + 1,8698 * 10^2$$

x étant le diamètre par trou (en $\mu$m).

4. Procédé selon l'une quelconque des revendications 1 à 3, **caractérisé en ce que** les gouttes présentent un diamètre moyen de 300 à 700 $\mu$m.

5. Procédé selon l'une quelconque des revendications 1 à 4, **caractérisé en ce que** la solution de monomères présente, à 20°C, une viscosité dynamique de 0,002 à 0,02 Pa.s.

6. Procédé selon l'une quelconque des revendications 1 à 5, **caractérisé en ce que** la solution de monomères présente, à 20°C, une densité de 1 à 1,3 g/cm$^3$.

7. Procédé selon l'une quelconque des revendications 1 à 6, **caractérisé en ce que** la solution de monomères présente, à 20°C, une tension superficielle de 0,02 à 0,06 N/m.

8. Procédé selon la revendication 7, **caractérisé en ce que** la température de la solution de monomères est de 10 à 60°C lors du passage dans le trou.

9. Procédé selon l'une quelconque des revendications 1 à 8, **caractérisé en ce que** les particules polymères absorbant l'eau présentent une capacité de rétention dans une centrifugeuse d'au moins 15 g/g.

10. Particules polymères absorbant l'eau, pouvant être obtenues selon un procédé selon les revendications 1 à 9, **caractérisées en ce que** les particules polymères absorbant l'eau présentent une densité apparente d'au moins 0,55 g/cm$^3$, un diamètre moyen de particules de 300 à 450 $\mu$m et une teneur en humidité d'au moins 10% en poids.

Fig. 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0348180 A1
- EP 0816383 A1
- WO 9640427 A1
- US 4020256 A
- US 20020193546 A
- DE 3519013 A1
- WO 2008040715 A2
- WO 2008052971 A1
- WO 2002055469 A1
- WO 2003078378 A1
- WO 2004035514 A1
- EP 0530438 A1
- EP 0547847 A1
- EP 0559476 A1
- EP 0632068 A1
- WO 9321237 A1
- WO 2003104299 A1
- WO 2003104300 A1
- WO 2003104301 A1
- DE 10331450 A1
- DE 10331456 A1
- DE 10355401 A1
- DE 19543368 A1
- DE 19646484 A1
- WO 9015830 A1
- WO 2002032962 A2
- EP 0083022 A2
- EP 0543303 A1
- EP 0937736 A2
- DE 3314019 A1
- DE 3523617 A1
- EP 0450922 A2
- DE 10204938 A1
- US 6239230 B
- DE 4020780 C1
- DE 19807502 A1
- DE 19807992 C1
- DE 19854573 A1
- DE 19854574 A1
- DE 10204937 A1
- DE 10334584 A1
- EP 1199327 A2
- WO 2003031482 A1
- DE 3713601 A1

### In der Beschreibung aufgeführte Nicht-Patentliteratur

- **F.L. BUCHHOLZ ; A.T. GRAHAM.** Modern Superabsorbent Polymer Technology. Wiley-VCH, 1998, 71-103